# EUROPÄISCHE PATENTSCHRIFT

(11) **EP 1 357 140 B1**
(45) Veröffentlichungstag und Bekanntmachung des Hinweises auf die Patenterteilung: **08.03.2006**
(21) Anmeldenummer: 03008326.5
(22) Anmeldetag: 10.04.2003
(51) Int. Cl.: C08F 220/18, C09J 133/06

(54) **Acrylatcopolymere und daraus erhältliche Haftklebemassen zum Verkleben von niederenergetischen Oberflächen**
Acrylate copolymers and adhesives obtainable therefrom for adhesion of low energy surfaces
Copolymères acrylates et adhésifs pouvant être obtenus à partir de ceux-ci pour le collage de surfaces à faible énergie

(30) Priorität: 26.04.2002 DE 10218570
(43) Veröffentlichungstag der Anmeldung: 29.10.2003
(73) Patentinhaber: Lohmann GmbH & Co. KG, 56567 Neuwied (DE)
(72) Erfinder: Caspari, Dirk, 56567 Neuwied (DE); Kura, Frank, 40670 Meerbusch (DE); Schütte, Mario, 56072 Koblenz (DE); Seeger, Kurt, Dr., 56567 Neuwied (DE)
(74) Vertreter: Flaccus, Rolf-Dieter

(56) Entgegenhaltungen:
- EP-A- 0 811 393
- US-A- 5 686 545

## Beschreibung

Die Erfindung betrifft Acrylatcopolymere mit haftklebenden Eigenschaften und Haftklebemassen, die auf Basis solcher Acrylatcopolymere hergestellt sind. Diese Acrylatcopolymere und Haftklebemassen eignen sich insbesondere zur Verklebung von niederenergetischen Oberflächen.

Ein Nachteil von bekannten und am Markt verfügbaren Haftklebstoffen auf der Basis von Acrylatcopolymeren ist deren unzureichende Haftung auf Substratoberflächen mit niedriger Oberflächenenergie. Solche niederenergetische, kritische Oberflächen finden sich bei vielen Gegenständen des täglichen Lebens, sowie bei Bauelementen oder Montageteilen, beispielsweise im Automobilbau, in der Möbel- und Bauindustrie. Unter den Materialien, die sich durch niederenergetische, unpolare Oberflächen auszeichnen, sind neben Polypropylen und Polyethylen insbesondere Ethylen-Propylen-Diencopolymere (EPDM), Pulverlacke, Silikone, fluorcarbonmodifizierte Oberflächen sowie Polytetrafluorethylen (Teflon®) zu nennen.

Klebstoffe, die bekanntermaßen auch auf niederenergetischen Oberflächen eine gute Haftung erzielen, sind einerseits Haftklebstoffe auf der Basis von Natur- oder Synthesekautschuk, andererseits Haftklebstoffe auf der Basis von Polysiloxanen. Die Einsatzmöglichkeiten dieser Haftklebstoffe sind allerdings sehr begrenzt. Kautschuk-basierte Haftklebstoffe sind aufgrund der Anwesenheit von C=C-Doppelbindungen empfindlich gegenüber der Einwirkung von Sauerstoff, Ozon und Licht. Hieraus resultiert eine fehlende oder ungenügende Alterungsbeständigkeit. Der Einsatz von Polysiloxan-Haftklebstoffen kommt aufgrund des hohen Preises bei vielen Anwendungen nicht in Betracht.

Es ist bekannt, daß die Haftung von Polyacrylat-Haftklebern auf niederenergetischen Oberflächen durch einen Zusatz von Klebrigmachern, wie Klebharzen, und/oder von Weichmachern verbessert werden kann. Allerdings haben derartige Zusätze den Nachteil, daß sie sich ungünstig auf die Kohäsion, Alterungs- und Temperaturstabilität auswirken.

In der Patentliteratur sind einige Haftkleber auf der Basis von Acrylatcopolymeren beschrieben worden, mit denen eine Verbesserung der Haftung auf niederenergetischen Oberflächen angestrebt wurde.

US 4,243,789 nennt N-Vinylpyrrolidon und hydroxylgruppenhaltige Monomere als haftungsverbessernd.
US 4,726,982 beschreibt Haftkleber auf der Basis von vernetzten Acrylatcopolymeren, aufgebaut aus Acrylsäureestermonomeren und N-Vinyllactam-Monomeren. Zusätzlich sind klebrigmachende Harze enthalten, wie z.B. Poly(isobornylmethacrylat).
US 4,728,684 offenbart acrylatmodifizierte Polyesterurethane und chlorierte Kautschuke, die durch Isocyanate vernetzt sind. Dadurch soll die Haftung auf niederenergetischen Oberflächen, z. B. PVC-Folien, verbessert werden.
US 4,994,538 betrifft durch Emulsionspolymerisation hergestellte Haftkleber, die reaktive Silikon-Acrylat-Polymere enthalten, um die Klebeigenschaften dieser Emulsionspolymere zu verbessern.
US 5,874,143 und US 6,280,557 beschreiben Acrylatcopolymerbasierte Haftklebstoffe, deren Haftung auf niederenergetischen Oberflächen durch Modifikation mit Harzen und Weichmachern erzielt wird.
US 5,840,783 beschreibt haftklebende Zusammensetzungen, die chlorierte Polyolefine enthalten und eine verbesserte Haftung auf niederenergetischen Kunststoffoberflächen aufweisen.
US 5,434,213 beschreibt Copolymere aus Ethylen-Vinylacetat mit Acrylat-Monomeren zur Verwendung in Haftklebstoffen, die für die Verklebung von niederenergetischen Oberflächen geeignet sind.
US 5,602,221 betrifft Haftkleber mit verbesserter Haftung auf niederenergetischen Oberflächen; dabei handelt es sich um Copolymere aus Acrylsäureestern mit einer Mischung von polaren und unpolaren, ethylenisch ungesättigten Monomeren, wobei die Homopolymere dieser Monomere unterschiedliche Glasübergangstemperaturen aufweisen.
US 5,817,426 offenbart Haftklebstoffe für niederenergetische Oberflächen, auf der Basis von Acrylatcopolymeren, die durch Emulsionspolymerisation hergestellt werden. Die Monomermischung enthält 20 bis 30 Gew.-% Isobornylacrylat, sowie Alkylacrylat-Monomere. Es wird angenommen, daß die Isobornylgruppe die adhäsiven und rheologischen Eigenschaften des Haftklebers beeinflußt; zudem wird erwähnt, daß Isobornylacrylat-Homopolymere eine hohe Glasübergangstemperatur aufweisen.

In der Praxis hat sich herausgestellt, daß der mit dem Einsatz von Isobornyl(meth)acrylat einhergehende Anstieg der Glasübergangstemperatur T_{g} das Klebstoffprodukt derartig hart macht, daß sich ein ausreichender "Tack" nur durch eine Erniedrigung des Molekulargewichts erreichen läßt. Diese Molekulargewichtserniedrigung führt jedoch gleichzeitig zu einer Reduzierung der Scherfestigkeit und der Temperaturbeständigkeit.

Keine der in den vorstehend genannten Druckschriften beschriebenen Erfindungen führte jedoch zu einem KlebstoffProdukt, das ohne Zusatz von Klebrigmachern oder/und Weichmachern eine ausreichende Haftung auf den obengenannten kritischen, niederenergetischen Oberflächen erzielt. Wie bereits erwähnt, ist der Zusatz solcher Stoffe mit nachteiligen Wirkungen verbunden.

Aufgabe der vorliegenden Erfindung war es deshalb, haftklebende Polymere und Haftklebstoffe auf der Basis von Acrylatcopolymeren bereitzustellen, die auf niederenergetischen Oberflächen haften und kostengünstig herstellbar sind, und die nicht mit den vorstehend beschriebenen Nachteilen des Standes der Technik behaftet sind. Insbesondere soll eine Verbesserung der Klebeigenschaften ohne Zusatz von Klebharzen oder Weichmachern ermöglicht werden.

Überraschenderweise wird diese Aufgabe gelöst durch ein Acrylatcopolymer mit der in Anspruch 1 beschriebenen Monomerzusammensetzung, sowie durch Haftklebemassen, die gemäß Anspruch 7 auf der Basis der erfindungsgemäßen Acrylatcopolymere hergestellt sind.

Die erfindungs gemäßen Acrylatcopolymere sind aus den nachfolgend beschriebenen Monomerkomponenten A, B und C zusammengesetzt. Die Acrylatcopolymere sind durch Lösemittelpolymerisation aus Monomerengemisch (Komponenten A, B, C) herstellbar. Die angegebenen Prozentanteile beziehen sich auf das das Gesamtgewicht des jeweiligen Monomer-Gemisches.

### Monomerkomponente A:

60 bis 95 Gew.-% eines oder mehrerer Monomere aus der Gruppe der Alkyl-Acrylate und Alkyl-Methacrylate. Der Alkylrest umfaßt 1 bis 10 C-Atome; er kann unverzweigt oder verzweigt, linear oder zyklisch sein.
Bevorzugt werden dabei (Meth)acrylate aus der Methylacrylat, n-Butylacrylat, tert.-Butylacrylat, 2-Ethylhexylacrylat, Isooctylacrylat, Isodecylacrylat, Isobomylacrylat und Isobomylmethacrylat umfassenden Gruppe eingesetzt.

### Monomerkomponente B:

5 bis 15 Gew.-% eines oder mehrerer Monomere aus der Gruppe der Ester der (Meth)acrylsäure mit einem Polyethylenglykoldervivat. Das Polyethylenglykoldervivat ist aus der Gruppe der Polyethylenglykolderivate mit 2 bis 4 Ethylenglykoleinheiten ausgewählt, wobei die genannten (Meth)acrylsäureester hydroxylgruppenfrei sind. Butoxydiethylenglykolmethacrylat, Ethoxytriethylenglykolmethacrylat und Triethylenglykoldimethacrylat werden dabei besonders bevorzugt.

### Monomerkomponente C:

1 bis 35 Gew.-% einer Mischung aus mindestens zwei Vinylverbindungen, ausgewählt aus der Gruppe von Vinylverbindungen, die eine oder mehrere der folgenden funktionellen Gruppen enthalten: freie Carbonylgruppen, freie Carboxylgruppen, Gruppen mit einem oder mehreren aktiven Wasserstoff-Atomen.
Unter "aktiven Wasserstoff-Atomen" werden Wasserstoff-Atome verstanden, die nach der Methode von Zerowitinoff gasvolumetrisch bestimmt werden können ("Zerewitinoff'scher Wasserstoff"). Bei der Reaktion mit einem Methylmagnesiumiodid erhält man für jedes aktive H-Atom ein Mol Methan. Aktive H-Atome liegen beispielsweise in OH- oder NH₂-Gruppen vor.

vorzugsweise werden die Vinylverbinden (Komponente C) aus der Gruppe ausgewählt, die Acrylsäure, β-Carboxyethylacrylat, Acrylamid, 2-Hydroxyethylacrylat und Ethylimidazolidonmethacrylat umfaßt.

Die erfindungsgemäßen Polymerisate zeichnen sich schon als Rein-Acrylate, d.h. ohne Zusatz von Harzen oder Weichmachern, durch eine verbesserte Haftung auf niederenergetischen Oberflächen wie Polyethylen, EPDM oder Teflon® aus (s. Ausführungsbeispiele). Die Erfindung schließt aber auch Klebstoffmassen mit ein, die zusätzlich einen Gehalt an Harzen oder/und Weichmachern aufweisen.

Bei den erfindungsgemäßen Acrylatcopolymeren sind mehrere längerkettige, flexible physikalische Verknüpfungspunkte in die Polymerkette eingebaut, die verschiedenartig funktionieren. Hierbei sind insbesondere lineare oder cyclische Wasserstoffbrückenbindungen zwischen Carbonyl- und/oder Carboxylgruppen mit Gruppen, die aktive Wasserstoffatome enthalten, zu nennen. Jede dieser Verknüpfungen ist für sich genommen wirksam; als besonders geeignet hat es sich jedoch erwiesen, wenn verschiedene solcher Verknüpfungsarten in Kombination vorliegen.

Durch die genannten Verknüpfungen worden die Scherfestigkeit und die Temperaturbeständigkeit verbessert, ohne daß damit eine wesentliche Erhöhung des Molekulargewichts verbunden ist, die sich nachteilig auf den "Tack" auswirken würde. Die Erfindung ermöglicht dadurch insbesondere den Einsatz von Isobornyl-Gruppen in Poly(meth)acrlyathaftklebern, wobei die oben beschriebenen Nachteile vermieden werden.

Gemäß einer bevorzugten Ausführungsform der Erfindung ist vorgesehen, daß die Acrylatcopolymere zusätzlich auf chemischem Wege vernetzt werden, vorzugsweise durch Reaktion mit einem Vernetzer aus der Gruppe, die Acetylacetonate, Titanate und aziridingruppenhaltige Verbindungen umfaßt.

Die Erfindung betrifft ferner Haftklebemassen für die Verklebung von niederenergetischen Oberflächen, wobei diese Haftklebstoffe ein oder mehrere Acrylatcopolymer(e) nach einem der vorangehenden Ansprüche enthalten.
Vorzugsweise liegen die genannten Acrylatcopolymere in einem Lösungsmittel oder Lösungsmittelgemisch in gelöster oder dispergierter Form vor. Geeignete Lösungsmittel sind dem Fachmann bekannt; insbesondere eignen sich Lösungsmittel aus der Gruppe der aliphatischen Kohlenwasserstoffe, Alkohole, Ketone, Aldehyde, Ester, Ether und aromatischen Lösungsmittel, besonders bevorzugt aus der Ethylacetat, Butylacetat, Aceton, Toluol, Xylol und Cyclohexan umfassenden Gruppe; Ethylacetat wird am meisten bevorzugt.
Der Polymergehalt der Haftklebemasse beträgt vorzugsweise 0,5 bis 95 Gew.-%, besonders bevorzugt 30 bis 75 Gew.-%.

Gemäß weiteren bevorzugten Ausführungsformen der Erfindung ist vorgesehen, daß die Haftklebemasse in Form eines Films oder einer Schicht vorliegt, beispielsweise in Form eines einseitig oder doppelseitig klebenden Klebebandes oder in Form von Klebeetiketten.

Ferner können den erfindungsgemäßen Haftklebemassen ein oder mehrere Zusatzstoffe beigemischt werden, um die Klebeigenschaften für spezielle Anwendungszwecke zu optimieren. Dabei handelt es sich vorzugsweise um Zusatzstoffe aus der Gruppe, die Weichmacher und klebrigmachende Harze umfaßt. Als Weichmacher kommen insbesondere Stoffe aus folgender Gruppe in Betracht: Phthalate, Polyoxyethylen-ether, Phosphat-Ester, Sulfonamide.
Als klebrigmachende Harze kommen insbesondere in Betracht: synthetische Kohlenwasserstoffharze, hydrierte Harzsäuren oder deren Derivate, insbesondere Ester hydrierter Harzsäuren. Der Gehalt der genannten Zusatzstoffe kann zwischen 0,1 und 30 Gew.-% betragen, vorzugsweise zwischen 0,5 und 15 Gew.-%.

Die erfindungsgemäßen Acrylatcopolymere werden anhand der nachfolgenden Ausführungsbeispiele erläutert. Zugleich wird dadurch der positive Effekt der erfindungsgemäß vorgeschlagenen Maßnahmen belegt.

Übersicht über die in den Beispielen verwendeten Abkürzungen:

| **Abkürzung** | **Monomer** | **Komponente** |
|---|---|---|
| 2-EHA | 2-Ethylhexylacrylat | A |
| AA | Acrylamid | C |
| AS | Acrylsäure | C |
| BA | Butylacrylat | A |
| BDGMA | Butoxydiethylenglykolmethacrylat | B |
| CEA | β-Carboxyethylacrylat | C |
| ET3EGMA | Ethoxytriethylenglykolmethacrylat | B |
| HEA | 2-Hydroxyethylacrylat | C |
| IDA | Isodecylacrylat | A |
| IOA | Isooctylacrylat | A |
| ISOBORA | Isobornylacrylat | A |
| MA | Methylacrylat | A |
| MEIO | Ethylimidazolidonmethacrylat | C |
| T3EGBMA | Triethylenglykoldimethacrylat | B |
| TBA | tert. Butylacrylat | A |

### Initiator/Radikal-Starter

| | |
|---|---|
| AIBN | Azo(bis)isobutyronitril |

Die Polymerisationsreaktionen wurden in 3-Halskolben mit 2 1 Fassungsvermögen ausgeführt, die mit Heizbad, Rührer, Rückflußkühler und Tropftrichter ausgestattet waren.

### Beispiel 1:

600 g Ethylacetat wurden vorgelegt und unter Stickstoffatmosphäre zum Sieden gebracht. Danach wurden 600 g einer Monomermischung folgender Zusammensetzung innerhalb 1 h gleichmäßig-zudosiert:

| **Gewichtsteile** | **Monomer** | **Komponente** |
|---|---|---|
| 170 | 2-EHA | A |
| 6,6 | AA | C |
| 20 | AS | C |
| 190 | BA | A |
| 60 | BDGMA | B |
| 29,8 | HEA | C |
| 121 | ISOBORA | A |
| 0,7 | MA | A |
| 0,7 | MEIO | C |

Die Polymerisationsreaktion wurde durch Zugabe von 1,2 Gewichtsteilen AIBN als Polymerisationsinitiator gestartet.

Der Reaktionsansatz wurde weitere 4 h gerührt, anschließend abgekühlt und mit 12 g Titanacetylacetonat, gelöst in 228 g Ethylacetat, vermischt.

### Beispiel 2:

Die Reaktion wurde wie in Beispiel 1 beschrieben durchgeführt, jedoch mit folgender Monomerzusammensetzung:

| **Gewichtsteile** | **Monomer** | **Komponente** |
|---|---|---|
| 270 | 2-EHA | A |
| 20 | AS | C |
| 70 | ET3EGMA | B |
| 195 | ISOBORA | A |
| 43 | MA | A |
| 0,5 | MEIO | C |
| 0,3 | T3EGDMA | B |

Polymerisations-Starter: 1,2 Gewichtsteile AIBN.

Zur Vernetzung wurden 12 g Tetrabutyltitanat, gelöst in 228 g Ethylacetat, hinzugefügt.

### Beispiel 3:

400 g Ethylacetat, 200 g Aceton und 120 g einer Monomermischung der unten angegebenen Zusammensetzung wurden vorgelegt und unter Schutzgasatmosphäre zum Sieden gebracht. Danach wurden innerhalb 1 h weitere 480 g derselben Monomermischung hinzudosiert. Nach weiteren 4 h wurde der Reaktionsansatz abgekühlt und mit 1,5 g eines aziridingruppenhaltigen Vernetzers, gelöst 28,5 g Ethylacetat, versetzt.

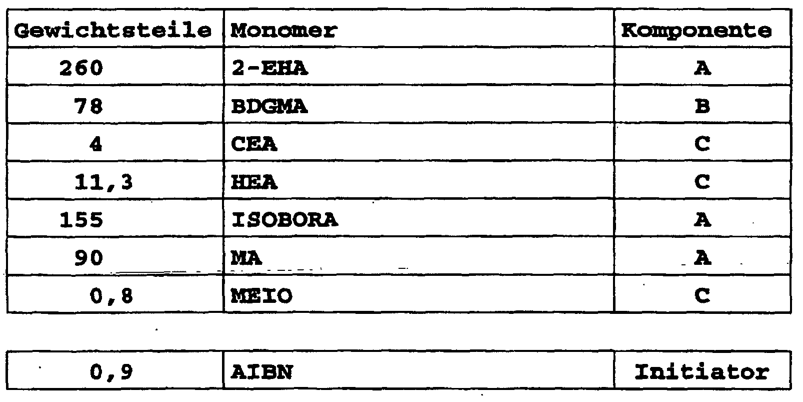

### Beispiele 4 bis 10:

Die Herstellung der Acrylatcopolymere der Beispiele 4 bis 10 erfolgte analog zu der unter Beispiel 3 beschriebenen Methode, sowohl hinsichtlich der Polymerisationsreaktion als auch der Vernetzungsreaktion.
Die dabei verwendeten Monomerzusammensetzungen sind der nachfolgenden Tabelle zu entnehmen:

### Beispiele 4 bis 10

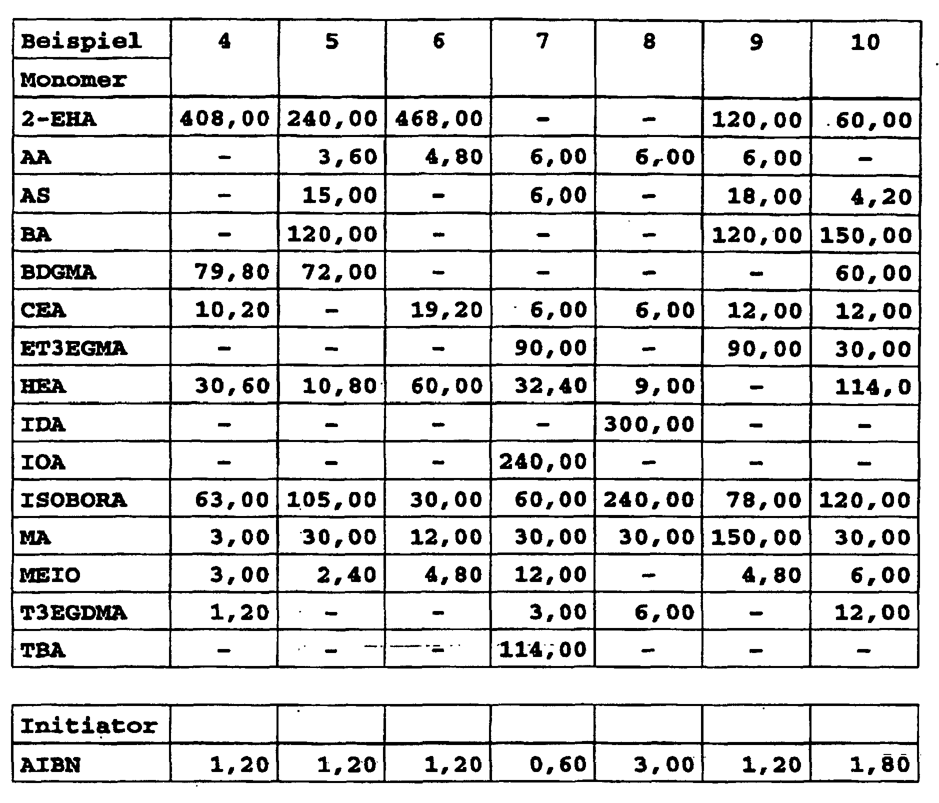

Die nach den Beispielen 1 bis 10 hergestellten Haftklebstofflösungen wurden jeweils mit einer Rakel auf ein silikonisiertes Papier als Träger aufgebracht. Die Auftragsdikke wurde so gewählt, daß nach 10 min Trocknung bei 105 °C ein Haftklebstofffilm mit einem Flächengewicht von 65 g/m² erhalten wurde.

Die so hergestellten Haftklebstofffilme wurden mit einer Polyethylenterephthalat(PETP)-Folie (23 µm Dicke) abgedeckt und 5 Tage bei Normalklima (23 °C, 50% relative Feuchtigkeit) gelagert und dann gemäß DIN EN 1939 hinsichtlich ihrer Schälfestigkeit auf den Substraten Polyethylen (PE), EPDM (Ethylen-Propylen-Dienmonomer) und Polytetrafluorethylen (Teflon®) geprüft. Die Prüfung der Scherfestigkeit nach DIN EN 1943 erfolgte auf VA-Stahl.

Als Vergleichsbeispiele wurden zwei Standard-Haftklebstoffe (Reinacrylate) herangezogen, die mit "STD 1" bzw. "STD 2" bezeichnet werden:
STD 1: Durotak 480-1760 (National Starch & Chemical)
STD 2: Eigenpolymerisat der Anmelderin.

### Schälfestigkeit gemäß DIN EN 1939

| Bsp. | 1 | 2 | 3 | 4 | 5 | 6 | 7 | 8 | 9 | 10 | STD 1 | STD 2 |
|---|---|---|---|---|---|---|---|---|---|---|---|---|
| PE | 4,0 | 4,5 | 4,8 | 9,8 | 6,5 | 6 | 5,7 | 3,5 | 4,2 | 3,8 | 3,6 | 2,6 |
| EPDM | 10 | 10,2 | 13 | 14,5 | 12,8 | 13 | 10 | 8,2 | 12 | 8 | 4,1 | 6,2 |
| Teflon® | 3 | 3,2 | 4,1 | 8,1 | 5,1 | 6,1 | 4,6 | 4,6 | 7,0 | 3,5 | 3,3 | 5,0 |

### Scherfestigkeit gemäß DIN EN 1943

| Bsp. | 1 | 2 | 3 | 4 | 5 | 6 | 7 | 8 | 9 | 10 | STD 1 | STD 2 |
|---|---|---|---|---|---|---|---|---|---|---|---|---|
| | 25 | 25 | 25 | 30 | 30 | 40 | 50 | 40 | 50 | 80 | 80 | 60 |

Aufgrund der verbesserten Haftung auf niederenergetischen Oberflächen eignen sich die erfindungsgemäßen haftklebenden Acrylatcopolymere und Haftklebemassen vorzüglich für Anwendungen im Automobil-, Fahrzeug- und Flugzeugbau, in der Bau- und Möbelindustrie, sowie in vielen anderen Fällen, in denen mindestens eines der miteinander zu verklebenden Fügeteile eine niedrige oberflächenenergie aufweist.

## Patentansprüche

1. Acrylatcopolymer zur Verwendung in Haftklebemassen, insbesondere geeignet für die Verklebung von niederenergetischen Oberflächen, zusammengesetzt aus folgenden Monomerkomponenten A, B und C:
A) 60 bis 95 Gew.-% eines oder mehrerer Monomere aus der Gruppe der Alkyl-Acrylate und Alkyl-Methacrylate, wobei der Alkylrest 1 bis 10 C-Atome umfaßt;
B) 5 bis 15 Gew.-% eines oder mehrerer Monomere aus der Gruppe der Ester der (Meth)acrylsäure mit einem Polyethylenglykoldervivat, ausgewählt aus der Gruppe der Polyethylenglykolderivate mit 2 bis 4 Ethylenglykoleinheiten, wobei die genannten (Meth)acrylsäureester hydroxylgruppenfrei sind;
C) 1 bis 35 Gew.-% einer Mischung aus mindestens zwei Vinylverbindungen, ausgewählt aus der Gruppe von vinylverbindungen, die eine oder mehrere der folgenden funktionellen Gruppen enthalten: freie Carbonylgruppen, freie Carboxylgruppen, Gruppen mit einem oder mehreren aktiven Wasserstoff-Atomen.

2. Acrylatcopolymer nach Anspruch 1, **dadurch gekennzeichnet, daß** die Monomerkomponente(n) (A) aus der Gruppe ausgewählt ist/sind, die Methylacrylat, n-Butylacrylat, tert.-Butylacrylat, 2-Ethylhexylacrylat, Isooctylacrylat, Isodecylacrylat, Isobornyl(meth)acrylat umfaßt, wobei Isobornyl-(meth)acrylat besonders bevorzugt ist.

3. Acrylatcopolymer nach Anspruch 1 oder 2, **dadurch gekennzeichnet, daß** die Monomerkomponente(n) B aus der Gruppe ausgewählt ist/sind, die Butoxydiethylenglykolmethacrylat, Ethoxytriethylenglykolmethacrylat und Triethylenglykoldimethacrylat umfaßt.

4. Acrylatcopolymer nach einem der vorangehenden Ansprüche, **dadurch gekennzeichnet, daß** die genannten Vinylverbindungen aus der Gruppe ausgewählt sind, die Acrylsäure, β-Carboxyethylacrylat, Acrylamid, 2-Hydroxyethylacrylat und Ethylimidazolidonmethacrylat umfaßt.

5. Acrylatcopolymer nach einem der vorangehenden Ansprüche, **dadurch gekennzeichnet, daß** es durch Polymerisation der Monomerkomponenten in einem Lösungsmittel oder Lösungsmittelgemisch hergestellt ist.

6. Acrylatcopolymer nach einem der vorangehenden Ansprüche, **dadurch gekennzeichnet, daß** es chemisch vernetzt ist, vorzugsweise durch Reaktion mit einem Vernetzer aus der Gruppe, die Acetylacetonate, Titanate und aziridingruppenhaltige Verbindungen umfaßt.

7. Haftklebemasse für die Verklebung von niederenergetischen Oberflächen, die ein oder mehrere Acrylatcopolymer(e) nach einem der vorangehenden Ansprüche enthält.

8. Haftklebemasse nach Anspruch 7, **dadurch gekennzeichnet, daß** das/die genannte(n) Acrylatcopolymer(e) in einem Lösungsmittel oder Lösungsmittelgemisch in gelöster oder dispergierter Form vorliegt/vorliegen, wobei das/die Lösungsmittel vorzugsweise aus der Gruppe der aliphatischen Kohlenwasserstoffe, Alkohole, Ketone, Aldehyde, Ester, Ether und aromatischen Lösungsmittel, besonders bevorzugt aus der Ethylacetat, Butylacetat, Aceton, Toluol, Xylol und Cyclohexan umfassenden Gruppe ausgewählt ist/sind, wobei Ethylacetat am meisten bevorzugt wird.

9. Haftklebemasse nach Anspruch 8, **dadurch** gekonnzeichnet, daß der Polymergehalt der Haftklebemasse 0,5 bis 95 Gew.-% beträgt, vorzugsweise 30 bis 75 Gew.-%.

10. Haftklebemasse nach Anspruch 7, **dadurch gekennzeichnet, daß** sie in Form eines Films oder einer Schicht vorliegt.

11. Haftklebemasse nach einem der Ansprüche 7 bis 10, **dadurch gekennzeichnet, daß** sie einen oder mehrere Zusatzstoffe enthält, vorzugsweise aus der Gruppe, die Weichmacher und klebrigmachende Harze umfaßt.

12. Verwendung eines Acrylatcopolymers nach einem der Ansprüche 1 bis 6 oder einer Haftklebemasse nach einem der Ansprüche 7 bis 11 zur Herstellung von Haftklebefilmen oder Klebebändern.

## Revendications

1. Copolymère d'acrylate destiné à être utilisé dans des masses auto-adhésives, convenant en particulier pour le collage de surfaces de faible énergie, constitué par les composants monomères A, B et C suivants :
A) 60 à 95% en poids d'un ou de plusieurs monomères du groupe des acrylates d'alkyle et des méthacrylates d'alkyle, le radical alkyle comprenant 1 à 10 atomes de carbone;
B) 5 à 15% en poids d'un ou de plusieurs monomères du groupe des esters de l'acide (méth)acrylique avec un dérivé de polyéthylèneglycol, choisi dans le groupe des dérivés de polyéthylèneglycol comprenant 2 à 4 unités éthylèneglycol, les esters de l'acide (méth)acrylique mentionnés étant exempts de groupes hydroxyle;
C) 1 à 35% en poids d'un mélange d'au moins deux composés de vinyle, choisis dans le groupe des composés de vinyle, qui contiennent un ou plusieurs des groupes fonctionnels suivants : groupes carbonyle libres, groupes carboxyle libres, groupes avec un ou plusieurs atomes d'hydrogène actifs.

2. Copolymère d'acrylate selon la revendication 1, **caractérisé en ce que** le ou les composants monomères (A) sont choisis dans le groupe comprenant l'acrylate de méthyle, l'acrylate de n-butyle, l'acrylate de tert-butyle, l'acrylate de 2-éthylhexyle, l'acrylate d'isooctyle, l'acrylate d'isodécyle, le (méth)acrylate d'isobornyle, parmi lesquels le (méth)acrylate d'isobornyle est particulièrement préféré.

3. Copolymère d'acrylate selon la revendication 1 ou 2, **caractérisé en ce que** le ou les composants monomères B sont choisis dans le groupe comprenant le méthacrylate de butoxydiéthylèneglycol, le méthacrylate d'éthoxytriéthylèneglycol et le diméthacrylate de triéthylèneglycol.

4. Copolymère d'acrylate selon l'une quelconque des revendications précédentes, **caractérisé en ce que** les composés de vinyle mentionnés sont choisis dans le groupe comprenant l'acide acrylique, l'acrylate de β-carboxyéthyle, l'acrylamide, l'acrylate de 2-hydroxyéthyle et le méthacrylate d'éthylimidazolidone.

5. Copolymère d'acrylate selon l'une quelconque des revendications précédentes, **caractérisé en ce qu'**il est préparé par polymérisation des composants monomères dans un solvant ou un mélange de solvants.

6. Copolymère d'acrylate selon l'une quelconque des revendications précédentes, **caractérisé en ce qu'**il est réticulé chimiquement, de préférence par réaction avec un réticulant du groupe comprenant les acétylacétonates, les titanates et les composés contenant des groupes aziridine.

7. Masse auto-adhésive pour le collage de surfaces de faible énergie, qui contient un ou plusieurs copolymères d'acrylate selon l'une quelconque des revendications précédentes.

8. Masse auto-adhésive selon la revendication 7, **caractérisée en ce que** le ou les copolymères d'acrylate mentionnés se trouvent sous forme dissoute ou dispersée dans un solvant ou un mélange de solvants, le ou les solvants étant de préférence choisis dans le groupe des hydrocarbures aliphatiques, des alcools, des cétones, des aldéhydes, des esters, des éthers et des solvants aromatiques, de manière particulièrement préférée dans le groupe comprenant l'acétate d'éthyle, l'acétate de butyle, l'acétone, le toluène, le xylène et le cyclohexane, parmi lesquels l'acétate d'éthyle est tout particulièrement préféré.

9. Masse auto-adhésive selon la revendication 8, **caractérisée en ce que** la teneur en polymère de la masse auto-adhésive est de 0,5 à 95% en poids, de préférence de 30 à 75% en poids.

10. Masse auto-adhésive selon la revendication 7, **caractérisée en ce qu'**elle se trouve sous forme d'une feuille ou d'une couche.

11. Masse auto-adhésive selon l'une quelconque des revendications 7 à 10, **caractérisée en ce qu'**elle contient un ou plusieurs additifs, de préférence du groupe des plastifiants et des résines qui rendent adhésif.

12. Utilisation d'un copolymère d'acrylate selon l'une quelconque des revendications 1 à 6 ou d'une masse auto-adhésive selon l'une quelconque des revendications 7 à 11 pour la préparation de feuilles auto-adhésives ou de bandes adhésives.

## Claims

1. Acrylate copolymer for use in pressure-sensitive adhesives, particularly suitable for the bonding of low-energy surfaces, composed of the following monomer components A, B and C:
A) from 60 to 95% by weight of one or more monomers from the group of the alkyl acrylates and alkyl methacrylates, the alkyl radical containing 1 to 10 carbon atoms;
B) from 5 to 15% by weight of one or more monomers from the group of the esters of (meth)acrylic acid with a polyethylene glycol derivative selected from the group of the polyethylene glycol derivatives having from 2 to 4 ethylene glycol units, the said (meth)acrylic esters being free from hydroxyl groups;
C) from 1 to 35% by weight of a mixture of at least two vinyl compounds selected from the group of vinyl compounds which contain one or more of the following functional groups: free carbonyl groups, free carboxyl groups, groups having one or more active hydrogen atoms.

2. Acrylate copolymer according to Claim 1, **characterized in that** the monomer component(s) A is/are selected from the group consisting of methyl acrylate, n-butyl acrylate, tert-butyl acrylate, 2-ethylhexyl acrylate, isooctyl acrylate, isodecyl acrylate and isobornyl (meth)acrylate, particular preference being given to isobornyl (meth)acrylate.

3. Acrylate copolymer according to Claim 1 or 2, **characterized in that** the monomer component(s) B is/are selected from the group consisting of butoxydiethylene glycol methacrylate, ethoxytriethylene glycol methacrylate and triethylene glycol dimethacrylate.

4. Acrylate copolymer according to any of the preceding claims, **characterized in that** the vinyl compounds C are selected from the group consisting of acrylic acid, β-carboxyethyl acrylate, acrylamide, 2-hydroxyethyl acrylate and ethylimidazolidone methacrylate.

5. Acrylate copolymer according to any of the preceding claims, **characterized in that** it is prepared by polymerizing the monomer components in a solvent or solvent mixture.

6. Acrylate copolymer according to any of the preceding claims, **characterized in that** it is crosslinked chemically, preferably by reaction with a crosslinker from the group consisting of acetylacetonates, titanates and compounds containing aziridine groups.

7. Pressure-sensitive adhesive for the bonding of low-energy surfaces, which comprises one or more acrylate copolymers according to any of the preceding claims.

8. Pressure-sensitive adhesive according to Claim 7, **characterized in that** the said acrylate copolymer(s) is/are in dispersion or solution in a solvent or solvent mixture, the solvent(s) being selected preferably from the group of the aliphatic hydrocarbons, alcohols, ketones, aldehydes, esters, ethers and aromatic solvents, with particular preference from the group consisting of ethyl acetate, butyl acetate, acetone, toluene, xylene and cyclohexane, most preferably ethyl acetate.

9. Pressure-sensitive adhesive according to Claim 8, **characterized in that** the polymer content of the adhesive is from 0.5 to 95% by weight, preferably from 30 to 75% by weight.

10. Pressure-sensitive adhesive according to Claim 7, **characterized in that** it is in the form of a film or coat.

11. Pressure-sensitive adhesive according to any of Claims 7 to 10, **characterized in that** it comprises one or more additives, preferably from the group consisting of plasticizers and tackifying resins.

12. Use of an acrylate copolymer according to any of Claims 1 to 6 or of a pressure-sensitive adhesive according to any of Claims 7 to 11 for producing pressure-sensitive adhesive films or adhesive tapes.
